# EUROPEAN PATENT APPLICATION

(11) **EP 2 361 669 A1**
(43) Date of publication of application: **31.08.2011**
(21) Application number: 11154440.9
(22) Date of filing: 15.02.2011
(51) Int. Cl.: B01D 53/94, B01J 23/10, B01J 23/63, B01J 23/66, B01J 37/00, B01J 37/02, B01J 37/03, B01J 35/10, B01J 29/03

(54) **Catalyst Composition and Catalytic Reduction System Comprising Yttrium**

(30) Priority: 26.02.2010 US 713436
(71) Applicant: General Electric Company, Schenectady, NY 12345 (US)
(72) Inventor: Yin, Ming, Niskayuna, NY 12309 (US); Lewis, Larry Neil, Niskayuna, NY 12309 (US); Siclovan, Oltea Puica, Niskayuna, NY 12309 (US); Hancu, Dan, Niskayuna, NY 12309 (US); Mhadeshwar, Ashish Balkrishna, Niskayuna, NY 12309 (US); Knoeller, Stephanie L., Deansboro, NY 13328 (US)
(74) Representative: Szary, Anne Catherine

(57) **Abstract**

A catalyst composition, a catalytic reduction system including the catalyst composition and a system using the catalytic reduction system are provided. The catalyst composition includes a templated metal oxide substrate and a catalyst material. The templated metal oxide substrate comprises yttrium and has a plurality of pores. Yttrium is present in an amount from about 0.05 mol percent to about 3 mol percent of the substrate. The catalyst material includes a catalyst metal disposed on the templated metal oxide substrate.

## Description

### BACKGROUND

The invention relates generally to a catalyst composition and particularly to a catalyst composition and system for reducing nitrogen oxides (NOx) through selective catalytic reduction (SCR).

In selective catalytic reduction (SCR), nitrogen oxide (NOx) reduction can be accomplished with either ammonia or urea, co-fed into the exhaust as these gases pass over a solid catalyst. High NOx reduction has been reported for both ammonia and urea-SCR. However, both the ammonia and urea reduction approaches require infrastructure to supply reductants, and where ammonia is used it may slip past the catalyst, resulting in unacceptable ammonia emissions. Another technology is hydrocarbon (HC) SCR wherein hydrocarbon serves as the reductant for NOx conversion. Hydrocarbons employed for HC-SCR include relatively small molecules like methane, ethane, ethylene, propane and propylene as well as linear hydrocarbons like hexane, octane, etc.

The injection of diesel or methanol has been explored in some of the heavy-duty diesel engines to supplement the HC in the exhaust stream. From an infrastructure point of view, it would be advantageous to employ an on-board diesel fuel as the hydrocarbon source for HC-SCR.

Hydrothermal stability is a concern for NOx SCR catalyst because of the presence of water (steam), oxygen, and heat in the operating environment. Improving the hydrothermal stability, or so-called aging properties, while at the same time preserving the NOx reduction activity, is desirable for developing a NOx catalyst.

Therefore, it may be desirable to have a catalyst composition with enhanced hydrothermal stability and acceptable NOx reduction activity.

### BRIEF DESCRIPTION

In one embodiment, a catalyst composition includes a templated metal oxide substrate and a catalyst material. The templated metal oxide substrate comprises yttrium and has a plurality of pores. Yttrium is present in an amount from about 0.05 mol percent to about 3 mol percent of the substrate. The catalyst material includes a catalyst metal disposed on the templated metal oxide substrate.

In one embodiment, a catalytic reduction system comprising the above catalyst composition is presented. The catalyst composition includes a templated metal oxide substrate and a catalyst material. The templated metal oxide substrate comprises yttrium and has a plurality of pores. Yttrium is present in an amount from about 0.05 mol percent to about 3 mol percent of the substrate. The catalyst material includes a catalyst metal disposed on the templated metal oxide substrate.

In one embodiment, a catalytic reduction system comprising a catalyst composition is presented. The catalyst composition includes a templated metal oxide substrate and a catalyst material. The templated metal oxide substrate comprises yttrium, zirconium and has a plurality of pores. The yttrium and zirconium are disposed as a part of the substrate such that the yttrium is present in an amount from about 0.1 mol percent to about 2 mol percent and zirconium is present in an amount from about 0.5 mol percent to about 3 mol percent, of the substrate. The catalyst material includes silver and is disposed on the templated metal oxide substrate.

In one embodiment, a system is provided. The system includes an internal combustion engine and a catalytic reduction system disposed to receive an exhaust stream from the engine. The catalytic reduction system comprises a catalyst composition and the catalyst composition includes a templated metal oxide substrate and a catalyst material. The templated metal oxide substrate comprises yttrium and has a plurality of pores. Yttrium is present in an amount from about 0.05 mol percent to about 3 mol percent of the substrate. The catalyst material includes a catalyst metal disposed on the templated metal oxide substrate.

### BRIEF DESCRIPTION OF DRAWINGS:

FIG. 1 is a graph depicting the NOx reduction activity of undoped, 3 mol percent silver on templated alumina (Ag-TA) catalyst composition.

FIG. 2 is a graph depicting the NOx reduction activity of yttrium doped, 3 mol percent Ag-TA.

FIG. 3 is a graph comparing the NOx reduction activities of undoped, zirconium-doped, and yttrium- and zirconium- doped 3 mol percent Ag-TA.

FIG. 4 is a graph comparing the NOx reduction activities of zirconium-doped, and yttrium- and zirconium- doped 3 mol percent Ag-TA for 2 different zirconium percentages.

### DETAILED DESCRIPTION

The systems described herein include embodiments that relate to a catalyst composition, and embodiments that relate to a catalytic reduction system including the catalyst composition and to a system using the catalytic reduction system for reducing nitrogen oxides. Generally disclosed is a NOx reduction catalyst and NOx reduction system for reducing NOx in exhaust gas discharged from a combustion device. Suitable combustion devices may include furnaces, ovens, or engines.

In the following specification and the claims that follow, the singular forms "a", "an" and "the" include plural referents unless the context clearly dictates otherwise.

As used herein, without further qualifiers, "mesoporous" refers to a material containing pores with diameters in a range of from about 2 nanometers to about 50 nanometers. A catalyst is a substance that can cause a change in the rate of a chemical reaction without itself being consumed in the reaction. A powder is a substance including finely dispersed solid particles. Templating refers to a controlled patterning; and, templated refers to determined control of an imposed pattern and may include molecular self-assembly. A monolith may be a ceramic block having a number of channels, and may be made by extrusion of clay, binders and additives that are pushed through a dye to create a structure. Washcoat refers to a thin coating over a core forming a rough, irregular surface, which has a greater surface area than the flat core surface. Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value.

In one embodiment, a composition is presented. The composition includes a templated metal oxide substrate having a plurality of pores, and a catalyst material comprising a catalyst metal and disposed on the substrate. As used herein, the amount of catalyst metal is presented as a percentage of the substrate. Unless otherwise mentioned, the percentages presented herein are in mol percent. The mole percentage is the fraction of moles of dopant element out of the moles of the templated substrate. For example, in Ag-TA, silver is presented as a fraction of moles of templated alumina (Al₂O₃).

Suitable substrate may include an inorganic material. Suitable inorganic materials may include, for example, oxides, carbides, nitrides, hydroxides, carbonitrides, oxynitrides, borides, or borocarbides. In one embodiment, the inorganic oxide may have hydroxide coatings. In one embodiment, the inorganic oxide may be a metal oxide. The metal oxide may have a hydroxide coating. Other suitable metal inorganics may include one or more metal carbides, metal nitrides, metal hydroxides, metal carbonitrides, metal oxynitrides, metal borides, or metal borocarbides. Metallic cations used in the foregoing inorganic materials can be transition metals, alkali metals, alkaline earth metals, rare earth metals, or the like.

In one embodiment, the catalyst substrate includes oxide materials. In one embodiment, the catalyst substrate includes alumina, zirconia, silica, zeolite, or any mixtures comprising these elements. Suitable substrate materials may include, for example, aluminosilicates, aluminophosphates, hexaaluminates, zirconates, titanosilicates, titanates, or a combination of two or more thereof. In one exemplary embodiment, the metal oxide is an aluminum oxide. In other embodiments, other substrates may be suitable and can be selected based on end-use parameters.

The desired properties of the catalyst substrate include, for example a relatively small particle size and high surface area. In one embodiment, the powder of the catalyst substrate has an average diameter that is less than about 100 micrometers. In one embodiment, the average diameter is less than about 50 micrometers. In a further embodiment, the average diameter is from about 1 micrometer to about 10 micrometers. The catalyst substrate powders may have a surface area greater than about 100 m²/gram. In one embodiment, the surface area of the catalyst substrate powder is greater than about 200 m²/gram. In one embodiment, the surface area is in a range of from about 200 m²/gram to about 500 m²/gram, and, in another embodiment, from about 300 m²/gram to about 600 m²/gram.

One way of forming templated substrates is by employing templating agents. Templating agents facilitate the production of catalyst substrates containing directionally aligned forms. The templating agent may be a surfactant, a cyclodextrin, a crown ether, or mixtures thereof. An exemplary templating agent is octylphenol ethoxylate, commercially available as TRITON X-114®.

The catalyst substrate may have periodically arranged templated pores of determined dimensions. The dimensions can include pore diameter, degree of curvature, uniformity of the inner surface, and the like. The median diameter of the pores, in some embodiments, is greater than about 2 nm. The median diameter of the pores, in one embodiment, is less than about 100 nm. In some embodiments, the median diameter of the pores is in a range from about 2 nm to about 20 nm. In another embodiment, the diameter is from about 20 nm to about 60 nm and in yet another embodiment, the diameter is from about 60 nm to about 100 nm. The pores in some embodiments have a periodicity greater than about 50 Å. The pores in some embodiments have a periodicity less than about 150 Å. In one embodiment, the pores have a periodicity in the range of from about 50 Å to about 100 Å. In another embodiment, the pores have a periodicity in the range from about 100 Å to about 150 Å.

In certain embodiments, the pore size has a narrow monomodal distribution. In one embodiment, the pores have a pore size distribution polydispersity index that is less than 1.5. As used herein, the polydispersity index is a measure of the distribution of pore diameter in a given sample. In a further embodiment, the polydispersity index is less than 1.3, and in a particular embodiment, the polydispersity index is less than 1.1. In one embodiment, the distribution of diameter sizes may be bimodal, or multimodal.

Suitable catalyst metal may include one or more of gallium, indium, rhodium, palladium, ruthenium, and iridium. Other suitable catalyst metal includes transition metal elements. Suitable catalyst metal also includes one or more of platinum, gold and silver. In one embodiment, the catalyst metal comprises silver. In one particular embodiment, the catalyst metal is substantially 100% silver.

The catalyst metal may be present in an amount of at least about 0.5 mol percent of the substrate. In one embodiment, the catalyst metal is present in an amount equal to or greater than 3 mol percent of the substrate. In one embodiment, the amount of catalyst metal present is about 6 mol percent of the catalyst substrate. In one embodiment, the catalytic metal may be present in an amount in a range of from about 1 mol percent to about 9 mol percent of the substrate.

NOx reduction catalysts are expected to have good hydrothermal aging properties. The hydrothermal aging process could be described as a model of real engine conditions. During hydrothermal aging, catalyst performance is often impaired by heat, oxygen and water (steam). Aging is usually described as the degradation rate of the NOx reduction performance. Catalyst degradation in the aging process may be described as involving two different mechanisms: (1) thermal expansion and (2) pore collapse. In the first mechanism, it is proposed that a small pore diameter change is associated with the thermal expansion. In the second mechanism, it is proposed that walls between pores collapse and the material is more severely damaged, which is usually associated with a significant change in pore diameter.

One exemplary NOx reduction catalyst composition is silver on templated alumina (Ag-TA) catalyst. This catalyst composition comprises a mesoporous, templated alumina substrate and a catalyst metal that is substantially 100% silver. The present inventors studied the aging properties of NOx reduction catalysts by taking Ag-TA as an example. Studies conducted by the inventors suggested that certain doping to the Ag-TA framework slows down the hydrothermal aging of the Ag-TA. The dopants added to slow down hydrothermal aging are referred to herein as hydrothermal dopants.

In one embodiment, hydrothermal dopants to Ag-TA include transition metals. In a further embodiment, the hydrothermal dopants are selected from the group consisting of yttrium, zirconium, and cerium. In another particular embodiment, the hydrothermal dopants are selected from the group consisting of yttrium and zirconium. In an exemplary embodiment, the hydrothermal dopant for hydrothermal stability of Ag-TA system consists essentially of yttrium. The dopants for Ag-TA can be in the metallic form or in oxide form. The amount of hydrothermal dopants in Ag-TA is in a range of about 0.05 mol percent to about 10 mol percent of the substrate. In another embodiment, the amount of hydrothermal dopants is in a range of about 0.1 mol percent to about 9 mol percent of the substrate. In yet another embodiment, the amount of hydrothermal dopants is in a range of about 1 percent to about 3 percent of the substrate. In an exemplary embodiment, the amount of hydrothermal dopants is in a range of about 0.1 percent to about 2 percent of the substrate.

Without being limited by theory, the inventors envisage a two-way role played by hydrothermal dopants. In one role, the hydrothermal dopant acts as a part of the substrate and helps in enhancing the substrate stability. In a second role, hydrothermal dopant works as a catalyst material. As a catalyst material, the hydrothermal dopant enhances the catalytic activity of the catalyst metal. The hydrothermal dopant can be in the metallic form or in a compound form. In one exemplary embodiment, the hydrothermal dopant is in the form of oxide.

In one embodiment, alumina or silica-alumina is the substrate or framework for a NOx catalyst. In one exemplary embodiment, alumina is the substrate for Ag-TA. The role of a substrate is to (1) provide robust support/framework at working temperature with corrosive gas and steam and (2) provide gas channels for NOx and reductant to get in touch with the catalytic material, for example Ag. Therefore, the robustness of the substrate plays an important role in improving aging properties of Ag-TA catalyst. In alumina, replacing some aluminum sites with other metals, for example yttrium, may result in better high temperature stability, thermal shock resistance and hydrothermal stability. Without being limited by theory, the inventors believe the addition of dopant elements, such as yttrium, to the alumina matrix lead to substitutions in the alumina framework that enhance the hydrothermal stability of the substrate. Different dopants can be experimentally studied and adapted for the hydrothermal stability of Ag-TA or any other NOx reduction catalysts.

Alumina has been found to have limited thermal and hydrothermal stability, which are influenced by several factors, for example, intrinsic cationic and anionic vacancies. Alumina may lose its surface area at high temperature as a result of a "hydrothermal sintering effect", an interaction between the intrinsic cationic vacancies and anionic vacancies. Alumina turns to become more crystallized when exposed in a hydrothermal environment. Introducing yttrium to alumina retards the hydrothermal sintering, thereby stabilizing the mesoporous structure.

Along with the hydrothermal dopants mentioned in the above paragraph, the composition can further have additional dopants enhancing hydrothermal stability of the composition and/or the catalytic activity of the catalyst metal. In one embodiment, one or more additional dopants may be selected from the group consisting of zirconium, iron, gallium, indium, tungsten, zinc, platinum, and rhodium. In one embodiment, the additional dopant comprises zirconium. In another embodiment, the additional dopant comprises rhodium and in yet another embodiment, the additional dopant comprises both gallium and indium wherein the amount of gallium is more than double the amount of indium by weight. In one embodiment, the additional dopant may be present in an amount in a range of from about 0.1 mol percent to about 20 mol percent, of the substrate. In a further embodiment, the additional dopants may be present in an amount in a range of from about 0.1 mol percent to about 5 mol percent, of the substrate. In an exemplary embodiment, the additional dopant may be present in an amount in a range of from about 0.5 mol percent to about 3 mol percent, of the substrate.

In one embodiment, the catalyst composition can be included in fabricating a catalytic surface. In one embodiment, the catalyst composition can be shaped and formed as a catalyst surface. In another embodiment, a slurry of the catalyst composition in a liquid medium can be formed and contacted with a catalyst support to form a catalytic reduction system with a washcoated monolith catalyst. Therefore, in one embodiment, the catalytic reduction system comprises the catalyst support and the catalytic composition comprising the templated metal oxide substrate and the catalyst material.

A catalyst support can be in any form including foams, monoliths, and honeycombs. Suitable materials for the catalyst support include ceramics and metals. Examples of ceramics include oxides, such as alumina, silica, titanate compounds, as well as refractory oxides, cordierite, mullite, and zeolite. Other examples include metal carbides and metal nitrides. Carbon may be useful in some embodiments. In specific embodiments, the catalyst support includes silicon carbide, fused silica, activated carbon, or aluminum titanate. Zeolite, as used herein, includes hydrated aluminosilicates, such as analcime, chabazite, heulandite, natrolite, phillipsite, and stilbite. Mullite, as used herein, is a form of aluminum silicate. In another exemplary embodiment, the suitable catalyst support includes metal corrugated forms.

In one embodiment, the slurry of the catalyst powder is washcoated onto a catalyst support such as a monolith. In one embodiment of the invention, the catalyst support is a monolith including cordierite. The applied washcoat may be dried, sintered and used to reduce an emission content such as NOx.

In a method of using the catalytic reduction system, the catalytic reduction system is disposed in the exhaust stream of an internal combustion engine. The internal combustion engine may be part of any of a variety of mobile or fixed/stationary assets, for example, an automobile, locomotive, or power generator. Because different engines have different combustion characteristics and because of the use of different fuels, the exhaust stream components differ from one system to another. Such differences may include variations in NOₓ levels, presence of sulfur, oxygen level, steam content, and the presence or quantity of other species of reaction product. Changes in the operating parameters of the engine may also alter the exhaust flow characteristics. Examples of differing operating parameters may include temperature and flow rate. The catalytic reduction system may be used to reduce NOₓ to nitrogen at a desirable rate and at a desirable temperature appropriate for the given system and operating parameters.

In one method of using the catalytic reduction system, the catalytic reduction system is disposed in the exhaust stream of an automobile. The catalyst composition of the catalytic reduction system reduces nitrogen oxides to nitrogen. The nitrogen oxide present in the gas stream may be reduced at a temperature of about 250°C or greater. In one embodiment, the reduction occurs at a temperature range of about 250°C to about 350°C. In another embodiment, the temperature is in the range of about 350°C to about 500°C. In another specific embodiment the temperature is in the range of about 500°C to about 600°C. In one exemplary embodiment, the nitrogen oxide present in the gas stream may be reduced at a temperature of less than about 350°C.

### EXAMPLES:

The following examples illustrate methods and embodiments in accordance with exemplary embodiments, and as such should not be construed as imposing limitations upon the claims. All components are commercially available from common chemical suppliers.

### Preparation of Materials:

### Preparation of 0.1 mol% yttrium- doped 3 mol% Ag-TA

A 1000 mL 3-neck round bottom flask was set up with a mechanical stirrer, reflux condenser, and addition funnel. 50 g (0.2 mol) of aluminum sec-butoxide (Al(O^{sec}Bu)₃) was dissolved in 200 mL of isopropyl alcohol (IPA) and added to the flask. 0.0386g (0.0001 mol) of yttrium 2,4-pentanedionate, was added to the flask.

Following the addition to the flask, the mechanical stirrer was turned on for half an hour until Y precursor was dissolved in IPA. About 2.65 g (0.02 mol) of ethyl acetoacetate (EA), 14 g of TRITON X-114, and 60 mL of IPA were combined and added to the flask. The mixture was stirred for 30 minutes at a medium pace under ambient conditions. During the 30-minute ambient stir period, about 0.5332g (0.003 mol) of AgNO₃ was dissolved in 7.5 mL of H₂O combined with 85 mL of IPA. This solution was added to syringe pump. After 30 minutes, the syringe pump was turned on and allowed to drip at a medium pace. During hydrolysis, the stirrer was turned up to account for the gaining viscosity of the mixture. The mixture was stirred under ambient conditions for approximately 0.5 hours following the completion of hydrolysis. After about 0.5 hours, the reaction mixture was aged at 60°C for 24 hours with stirring. The resulting gel was then filtered overnight and extracted using soxhlet extraction with Ethanol (EtOH) for 24 hours. The extracted solid was then dried in a vacuum oven at 50°C for 24 hours. The dry powder was calcined at 550°C in N₂/air for 6 hours.

### Preparation of Zirconium- doped 3 mol% AT TEA

A 1000 mL 3-neck round bottom flask was set-up with a mechanical stirrer, reflux condenser and addition funnel. 50 g (0.2 mol) of aluminum sec-butoxide (Al(O^{sec}Bu)₃) was dissolved in 200 mL of IPA and added to the flask. 0.001 mol (0.3877 g) and 0.005 mol (1.9384 g) zirconium isopropoxide isopropanol complex was added to make catalysts with varying (1 mol% and 5 mol%) Zr concentrations. Following the addition to the flask, the mechanical stirrer was turned on for 2 hours until the zirconium precursor was dissolved in IPA. 2.65 g (0.02 mol) of ethyl acetoacetate (EA), 14 g TRITON X-114, and 60 mL IPA were combined and added to the flask with the Al(O^{sec}Bu)₃ solution. The mixture was stirred for 30 minutes at a medium pace under ambient conditions. During the 30-minute ambient stirring period, 0.003 mol AgNO3 (0.5332g) was dissolved in 7.5 mL H₂O combined with 85 mL of IPA. This solution was added to syringe pump. After 30 minutes, the syringe pump was turned on and allowed to drip at a medium pace. During hydrolysis, the stirrer was turned up to account for the gaining viscosity of the mixture. The mixture was stirred under ambient conditions for approximately 0.5 hours following the completion of hydrolysis. After 0.5 hours, the reaction mixture was aged at 60°C for 24 hours with stirring. The resulting gel was then filtered overnight and extracted using soxhlet extraction with ethanol (EtOH) for 24 hours. The extracted solid was then dried in a vacuum oven at 50°C for 24 hours. The powders were calcined at 550°C in N₂/air for 6 hours.

### Preparation of 0.5 mol% Yttrium and 1 mol% zirconium- doped Ag-TA

A 1000 mL 3-neck round bottom flask was set-up with a mechanical stirrer, reflux condenser and addition funnel. 50 g (0.2 mol) of aluminum sec-butoxide (Al(O^{sec}Bu)₃) was dissolved in 200 mL of IPA and added to the flask. 0.001 mol (0.3877g) zirconium isopropoxide isopropanol complex and 0.1931g (0.0005 mol) yttrium 2,4-pentanedionate were added. Following the addition to the flask, the mechanical stirrer was turned on for 2 hours until the yttrium and zirconium precursors were dissolved in IPA. 2.65 g (0.02 mol) of ethyl acetoacetate (EA), 14 g TRITON X-114, and 60 mL IPA were combined and added to the flask with the Al(O^{sec}Bu)₃ solution. The mixture was stirred for 30 minutes at a medium pace under ambient conditions. During the 30-minute ambient stirring period, 0.003 mol AgNO3 (0.5332g) was dissolved in 7.5 mL H₂O combined with 85 mL of IPA. This solution was added to syringe pump. After 30 minutes, the syringe pump was turned on and allowed to drip at a medium pace. During hydrolysis, the stirrer was turned up to account for the gaining viscosity of the mixture. The mixture was stirred under ambient conditions for approximately 0.5 hours following the completion of hydrolysis. After 0.5 hours, the reaction mixture was aged at 60°C for 24 hours with stirring. The resulting gel was then filtered overnight and extracted using soxhlet extraction with ethanol (EtOH) for 24 hours. The extracted solid was dried in a vacuum oven at 50°C for 24 hours. The powders were calcined at 550°C in N₂/air for 6 hours.

### Catalyst testing:

After calcination, some powders were tested for fresh performance and some powders were aged at 650°C with water and oxygen for 96 hours. Fresh catalyst composition and aged catalyst composition were tested side by side and their NOx reduction activities were plotted.

### Test results

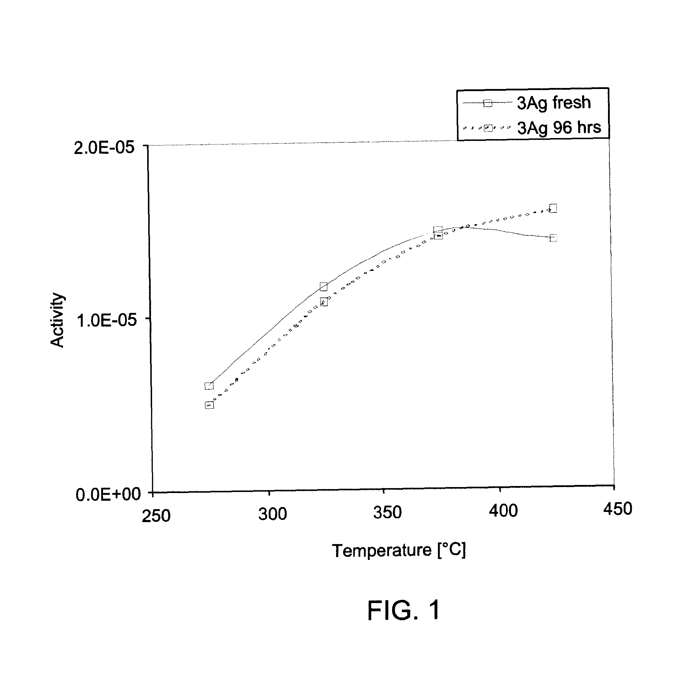

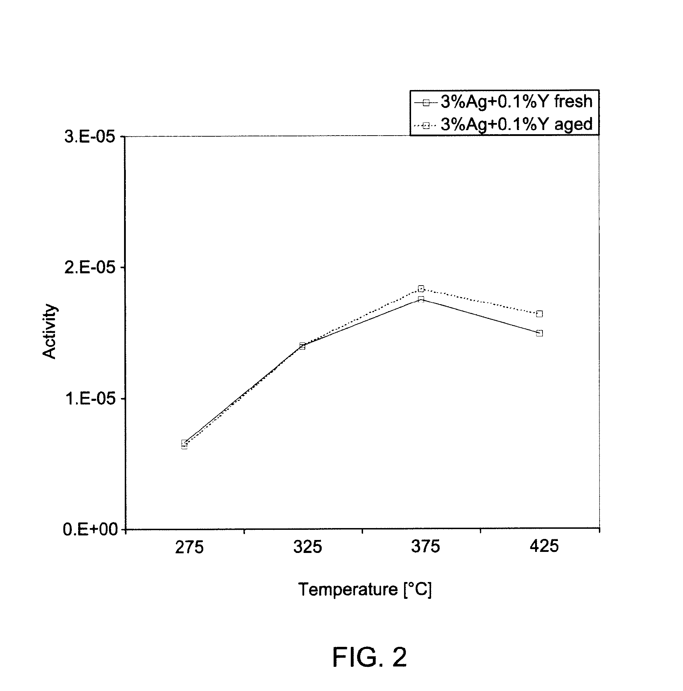

FIG. 1 illustrates the NOX activities of the fresh and 96 hours aged 3% Ag-TA catalyst composition, while FIG. 2 illustrates the fresh and 96 hours aged 0.1% yttrium doped 3% Ag-TA catalyst composition. By comparing these two graphs, it can be seen that the yttrium doping slightly increases the NOx reduction activities of the Ag-TA and also that the aging doesn't decrease the NOx reduction activity of 0.1 % yttrium doped Ag-TA catalyst composition.

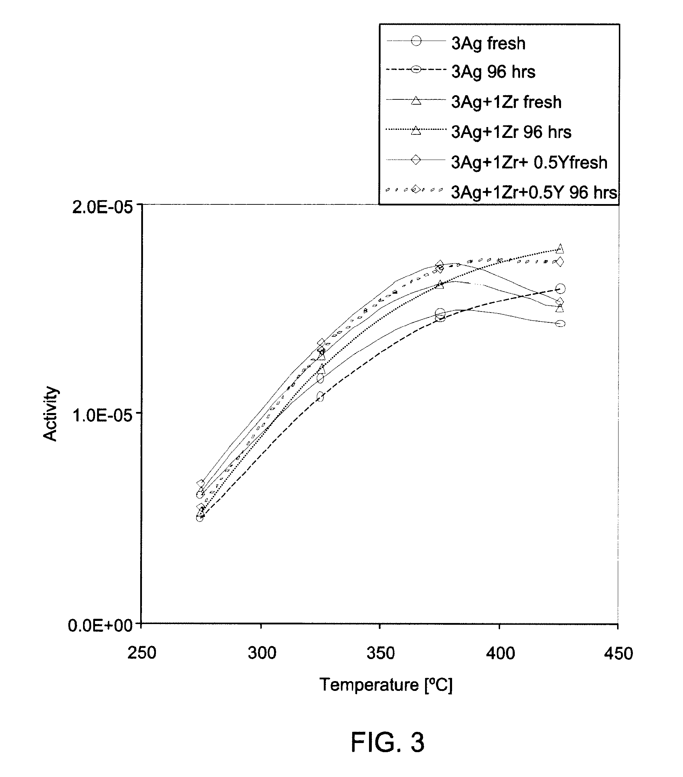

FIG. 3 graphically illustrates the comparison of NOx reduction activities of the fresh and aged samples of undoped, 1% zirconium-doped, and 0.5% yttrium- and 1% zirconium- doped 3% silver on templated alumina(Ag-TA) catalyst composition. The graph illustrates that reduction activities of the aged samples are less than the fresh samples in a temperature range of about 275°C to about 375°C. Further, it can be clearly seen that the zirconium doping increases the fresh and aged NOx reduction performance of the Ag-TA composition and yttrium addition further improves the reduction performance.

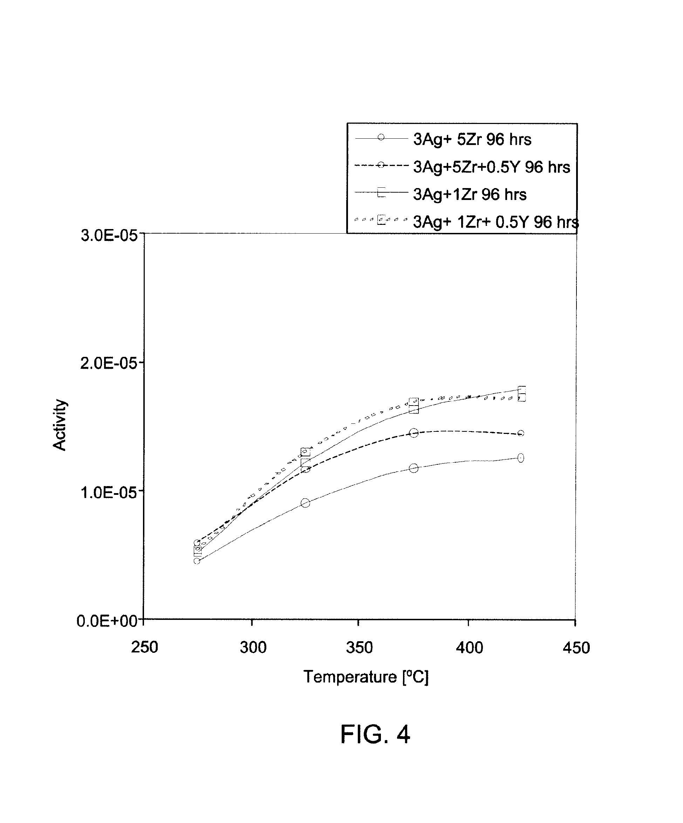

FIG. 4 is a graph comparing the NOx reduction activities of the 96 hrs aged zirconium-doped, and 0.5%yttrium- and zirconium- doped 3% Ag-TA catalyst composition for 2 different zirconium doping levels. It can be clearly seen that addition of 0.5%Y improves activity with both 1%Zr and 5%Zr.

The embodiments described herein are examples of composition, and articles having elements corresponding to the elements of the invention recited in the claims. This written description may enable those of ordinary skill in the art to make and use embodiments having alternative elements that likewise correspond to the elements of the invention recited in the claims. The scope of the invention thus includes composition, and articles that do not differ from the literal language of the claims, and further includes other composition and articles with insubstantial differences from the literal language of the claims. While only certain features and embodiments have been illustrated and described herein, many modifications and changes may occur to one of ordinary skill in the relevant art. The appended claims cover all such modifications and changes.

## Claims

1. A catalyst composition, comprising:
a templated metal oxide substrate having a plurality of pores and comprising yttrium,
wherein the yttrium is present in an amount in the range from about 0.05 mol percent to about 3 mol percent of the substrate; and
a catalyst material comprising a catalyst metal and disposed on the substrate.

2. The composition of claim 1, wherein the amount of yttrium is in the range from about 0.1 mol percent to about 2 mol percent of the substrate.

3. The composition of claim 1 or claim 2, wherein the catalyst metal comprises a noble metal.

4. The composition of any preceding claim, wherein the catalyst metal comprises silver.

5. The composition of any preceding claim, wherein the templated metal oxide substrate comprises alumina or silica-alumina.

6. The composition of any preceding claim, wherein the yttrium is present in the form of yttrium oxide.

7. The composition of any preceding claim, wherein the templated metal oxide has periodically arranged templated pores, wherein the average diameter of the pores is in a range of from about 2 nanometers to about 100 nanometers and the pores have a periodicity in a range of from about 50 Angstrom to about 130 Angstrom.

8. The composition of any preceding claim, wherein the substrate further comprises an additional dopant material selected from the group consisting of zirconium, iron, gallium, indium, tungsten, zinc, platinum, and rhodium.

9. The composition of claim 8, wherein the additional dopant material is zirconium in an amount from about 0.1 mol percent to about 5 mol percent or rhodium in an amount from about 0.1 mol percent to about 5 mol percent.

10. The composition of claim 8, wherein the additional dopant material comprises both gallium and indium wherein the amount of gallium is more than double the amount of indium by weight.

11. The composition of any one of claims 8 to 10, wherein the additional dopant material is present as an oxide.

12. A catalytic reduction system comprising a catalyst composition according to any preceding claim.

13. A catalytic reduction system comprising a catalyst composition, the catalyst composition comprising:
a templated metal oxide substrate having a plurality of pores and comprising yttrium and zirconium disposed as a part of the substrate, wherein the yttrium is present in an amount from about 0.1 mol percent to about 2 mol percent and zircoinum is present in an amount from about 0.5 mol percent to about 3 mol percent, of the substrate; and
a catalyst material comprising silver and disposed on the templated metal oxide substrate.

14. The catalytic reduction system of claim 13, wherein the yttrium and zirconium are present as oxides.

15. A system comprising:
an internal combstion engine, and
a catalytic reduction system disposed to receive an exhaust stream from the engine,
wherein the catalytic reduction system comprising a catalyst composition, the catalyst composition comprising:
a templated metal oxide substrate having a plurality of pores and comprising yttrium,
wherein the yttrium is present in an amount in the range from about 0.05 mol percent to about 3 mol percent of the substrate; and
a catalyst material comprising a catalyst metal and disposed on the substrate.
